# EUROPEAN PATENT APPLICATION

(11) **EP 4 451 413 A1**
(43) Date of publication of application: **23.10.2024**
(21) Application number: 24159252.6
(22) Date of filing: 22.02.2024
(51) Int. Cl.: H01M 10/0587, H01M 50/107, H01M 50/188

(54) **SECONDARY BATTERY**

(30) Priority: 21.04.2023 KR 20230052567
(71) Applicant: Samsung SDI Co., Ltd., Yongin-si, Gyeonggi-do 17084 (KR)
(72) Inventor: CHOI, Woo Hyuk, 17084 Yongin-si (KR); YANG, Jun Ho, 17084 Yongin-si (KR); KWON, Jun Hwan, 17084 Yongin-si (KR); PARK, Hyun Suk, 17084 Yongin-si (KR); LEE, Tae Yoon, 17084 Yongin-si (KR); KIM, Young Ho, 17084 Yongin-si (KR)
(74) Representative: Marks & Clerk LLP

(57) **Abstract**

A secondary battery includes: an electrode assembly; a can having a lower surface and a side surface and accommodating the electrode assembly; a cap plate coupled to an upper end of the can; a terminal on the lower surface of the can; and an insulator having a plate-shaped portion and an extending portion extending upwardly from a circumference of the plate-shaped portion. The plate-shaped portion is between the electrode assembly and the lower surface of the can, and the extending portion has an upper end contacting a lower portion of the electrode assembly.

## Description

### BACKGROUND

### 1. Field

Aspects of embodiments of the present disclosure relate to a secondary battery.

### 2. Description of the Related Art

Different from a primary battery that is not designed to be charged, a secondary battery is a battery that is designed to be charged and discharged. Low-capacity batteries are used in portable, small electronic devices, such as smart phones, feature phones, tablet computers, notebook computers, digital cameras, or camcorders, and large-capacity batteries are widely used as power sources for driving motors in hybrid vehicles and electric vehicles or as power storage devices (e.g., home or utility scale power storage devices).

Secondary batteries can be classified into cylindrical, prismatic, and pouch-type secondary batteries based on their shape. Specifically, a cylindrical secondary battery generally includes an electrode assembly, a case (also referred to as a can or a pouch), a cap assembly, etc., and has a structure in which the case is electrically connected to a negative electrode, and the cap assembly is electrically connected to a positive electrode.

The above information disclosed in this Background section is for enhancement of understanding of the background of the present disclosure, and therefore, it may contain information that does not constitute prior (or related) art.

### SUMMARY

Embodiments of the present disclosure provide a secondary battery in which an electrode assembly and a can are insulated from each other.

Embodiments of the present disclosure also provide a secondary battery having increased battery capacity.

Embodiments of the present disclosure also provide a secondary battery in which an electrode assembly is stably supported.

A secondary battery, according to an embodiment of the present disclosure, includes: an electrode assembly; a can having a lower surface and a side surface and accommodating the electrode assembly; a cap plate coupled to an upper end of the can; a terminal on the lower surface of the can; and an insulator having a plate-shaped portion and an extending portion extending upwardly from a circumference of the plate-shaped portion. The plate-shaped portion is between the electrode assembly and the lower surface of the can, and the extending portion has an upper end contacting a lower portion of the electrode assembly.

The electrode assembly may include: a first electrode plate having a non-coating portion exposed upwardly from the electrode assembly; a second electrode plate having a non-coating portion exposed downwardly from the electrode assembly; and a separator between the first electrode plate and the second electrode plate. The first electrode plate, the separator, and the second electrode plate may be wound together about an axis. A portion of the non-coating portion of the second electrode plate may be removed at an outermost periphery of the electrode assembly by a radius, and the extending portion of the insulator may extend toward a space from where the non-coating portion of the second electrode plate is removed.

The non-coating portion of the second electrode plate may be removed in a range corresponding to two to three turns of the electrode assembly.

The separator may form an outer surface of the electrode assembly.

An upper end of the extending portion of the insulator may be flat.

The extending portion may have an outer diameter corresponding to that of the electrode assembly.

The extending portion of the insulator may have a thickness that gradually increases toward a lower portion of the electrode assembly.

The terminal may be in a hole in the plate-shaped portion.

The secondary battery may further include a gasket between the can and the terminal, and the gasket may extend into the hole in the plate-shaped portion.

The terminal may have an outer portion on an outside of the lower surface of the can, an inner portion on an inside of the lower surface of the can, and a connecting portion extending through the hole in the plate-shaped portion of the can and connecting the outer portion and the inner portion. The hole in the plate-shaped portion may have a smaller diameter than the inner portion of the terminal.

At least some of the above and other features of the invention are set out in the claims.

### BRIEF DESCRIPTION OF DRAWINGS

FIG. 1 is a cross-sectional view of a secondary battery according to an embodiment of the present disclosure.
FIG. 2 is an enlarged view of the portion II of FIG. 1.
FIG. 3 is an enlarged view the portion II of FIG. 1 according to another embodiment of the present disclosure.

### DETAILED DESCRIPTION

Hereinafter, embodiments of the present disclosure will be described, in detail, with reference to the accompanying drawings. Embodiments of the present disclosure are provided to more completely explain the present disclosure to those skilled in the art, and the following embodiments may be modified in various other forms. The present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

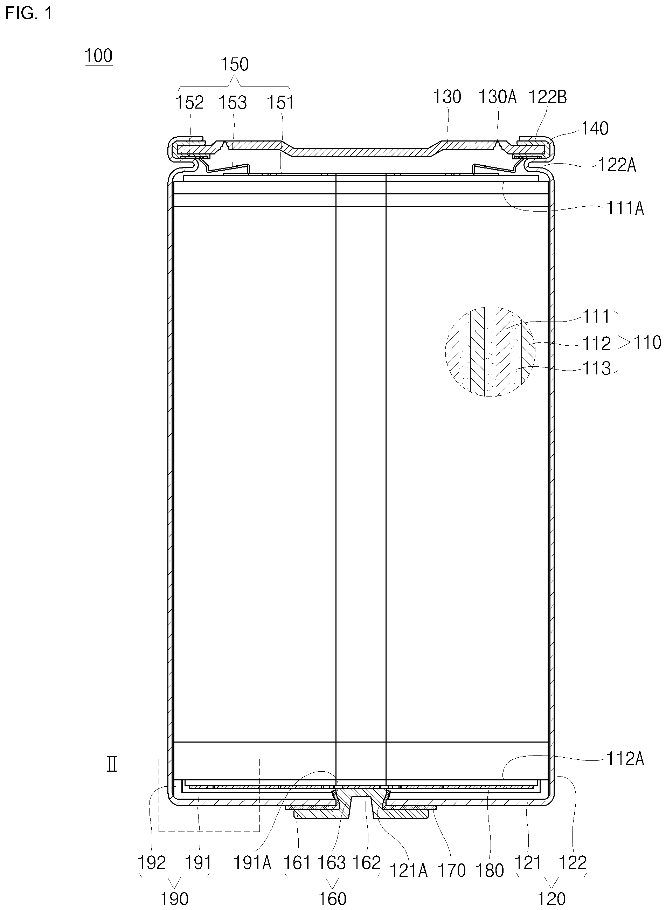

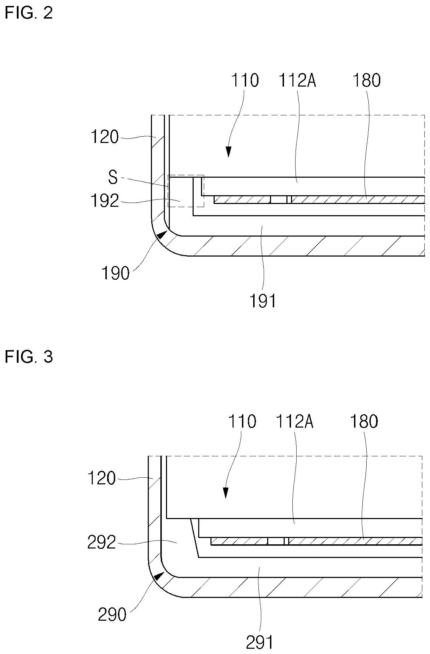

FIG. 1 is a cross-sectional view of a secondary battery 100 according to an embodiment of the present disclosure, and FIG. 2 is an enlarged view of the portion II of FIG. 1.

Referring to FIGS. 1 and 2, the secondary battery 100, according to an embodiment of the present disclosure, includes an electrode assembly 110, a can 120, a cap plate 130, a first gasket 140, a first current collector plate 150, a terminal 160, a second gasket 170, a second current collector plate 180, and an insulator 190.

The electrode assembly 110 includes a first electrode plate 111, a second electrode plate 112, and a separator 113.

The first electrode plate 111 may be any one of a negative electrode plate and a positive electrode plate. For example, when the first electrode plate 111 is a negative electrode plate, the first electrode plate 111 may include a current collector plate (e.g., a negative electrode current collector plate) made of a thin, conductive metal plate, such as copper or nickel foil or mesh, having a coating portion (e.g., a negative electrode coating portion) coated with an active material (e.g., a negative electrode active material) on one or both sides thereof and a non-coating portion 111A (e.g., a negative electrode non-coating portion) not coated with the negative electrode active material. The negative electrode active material may include, for example, a carbon-based material, silicon (Si), tin (Sn), tin oxide, tin alloy composite, transition metal oxide, a lithium metal nitrite, or metal oxide.

The second electrode plate 112 may be any one of a negative electrode plate and a positive electrode plate. For example, when the second electrode plate 112 is a positive electrode plate, the second electrode plate 112 may include a current collector plate (e.g., a positive electrode current collector plate) made of a thin, conductive metal plate, such as aluminium foil or mesh, having a coating portion (e.g., a positive electrode coating portion) coated with an active material (e.g., a positive electrode active material) on one or both sides thereof and a non-coating portion 112A (e.g., a positive electrode non-coating portion) not coated with the positive electrode active material. The positive electrode active material may include a chalcogenide compound, for example, a complex metal oxide, such as LiCoO₂, LiMn₂O₄, LiNiO₂, LiNiMnO₂, etc.

The separator 113 is interposed between the first electrode plate 111 and the second electrode plate 112 to prevent a short circuit between the first electrode plate 111 and the second electrode plate 112. The separator 113 may be made of, for example, polyethylene, polypropylene, or a porous copolymer of polyethylene and polypropylene.

The electrode assembly 110 is formed by stacking the first electrode plate 111, the separator 113, the second electrode plate 112, and the separator 113 in that order and winding these layers around a common axis to form a so-called jelly-roll. The first electrode plate 111 and the second electrode plate 112 are aligned such that the non-coating portion 111A of the first electrode plate 111 and the non-coating portion 112A of the second electrode plate 112 are aligned on (e.g., protrude from) one side (e.g., the upper side in the drawing) and the opposite side (e.g., the lower side in the drawing) of the electrode assembly 110, respectively.

The non-coating portion 112A of the second electrode plate 112 may be removed by a radius (e.g., a predetermined radius) from the outermost periphery of the electrode assembly 110. For example, the non-coating portion 112A of the second electrode plate 112 may be removed (e.g., notched, cut, etc.) by a length from the winding end. For example, the non-coating portion 112A of the second electrode plate 112 may be removed by a length corresponding to 2 to 3 turns during winding from the winding end (e.g., a portion of the non-coating portion 112A may be removed from the second electrode plate 112 prior to winding with the other layers to form the electrode assembly 110). As a result, an empty space (S) is provided at the outermost lower end of the electrode assembly 110 (see, e.g., FIG. 2).

The outer surface of the electrode assembly 110 may be entirely surrounded by the separator 113. Therefore, the outer surface of the electrode assembly 110 may be insulated from the can 120 by itself (e.g., without a separate insulator).

The can 120 may have a cylindrical shape overall.

The can 120 may have a lower surface 121 formed in a disk shape and a side surface 122 extending upwardly from the circumference of the lower surface 121. The lower surface 121 and the side surface 122 may be integrally formed. For example, the can 120 may be formed by a deep drawing process. Because the upper surface of the can 120 is open, the insulator 190, the electrode assembly 110, electrolyte, etc. are inserted into the inside of the can 120 through the open upper surface of the can 120, and then, the upper surface of the can 120 may be closed by the cap plate 130.

In the drawings, the can 120 is illustrated as including a beading part (e.g., a bead) 122A and a crimping part (e.g., a crimp) 122B.

The beading part 122A may be formed by inserting the electrode assembly 110 into the can 120 and then, concavely press-fitting the upper part of the can 120 inwardly. The beading part 122A prevents the electrode assembly 110 from being separated from the can 120 and supports the cap plate 130.

The crimping part 122B is formed by seating the cap plate 130 on the beading part 122A and then inwardly bending the top end of the can 120 to surround the edge of the cap plate 130 and, thus, fixes the cap plate 130.

In addition, the can 120 has a hole 121A formed in the lower surface 121 for installation of the terminal 160.

The can 120 may be made of a conductive metal, such as steel, steel alloy, aluminium, or aluminium alloy, and may be electrically connected to the first electrode plate 111 of the electrode assembly 110 through the first current collector plate 150. Therefore, when the first electrode plate 111 is a negative electrode plate, the can 120 has a negative polarity.

The cap plate 130 is coupled to the upper end of the can 120. The cap plate 130 may be insulated from the can 120 by the first gasket 140. For example, the cap plate 130 may not have any polarity (e.g., may be electrically floating). Therefore, the cap plate 130 may not be made of a conductive metal but, to provide sufficient rigidity, may be made of a metal.

In addition, the cap plate 130 may include a notch 130A. The notch 130A acts as a safety vent. For example, if sufficient gas is generated inside the can 120 to increasing the pressure in the can 120 to a reference pressure or above, the notch 130A may be spontaneously cut (e.g., may burst) to release the gas and pressure, thereby preventing an explosion of the secondary battery 100.

The notch 130A may be formed along an edge of the cap plate 130. Therefore, when the pressure is applied, the notch 130A can be cut (e.g., can burst) more easily, and when the notch 130A is cut, the fracture area can be made as wide as possible so that the gas and pressure can be released quickly.

In addition, the notch 130A may be formed on an inner surface of the cap plate 130. Accordingly, the notch 130A may not be unintentionally damaged or corroded due to external factors.

The first gasket 140 is disposed between the can 120 and the cap plate 130 to tightly seal a space therebetween while insulating the can 120 and the cap plate 130 from each other.

The first current collector plate 150 is disposed on the upper side of the electrode assembly 110 and is made of a conductive metal to electrically connect the first electrode plate 111 of the electrode assembly 110 and the can 120 to each other.

The first current collector plate 150 has an electrode plate contact portion 151 in contact with the non-coating portion 111A of the first electrode plate 111 of the electrode assembly 110, a can contact portion 152 in contact with the can 120, and a connecting portion 153 connecting (e.g., extending between) the electrode plate contact portion 151 and the can contact portion 152.

The connecting portion 153 may be bent at least once. In the drawing, the connecting portion 153 is illustrated as being bent three times. Through this bending, even if the electrode assembly 110 moves (e.g., expands or partially flows) within the can 120, the connecting portion 153 elastically absorbs such movement, thereby stably maintaining the electrically connected state of the electrode assembly 110 and the can 120.

The electrode plate contact portion 151 of the first current collector plate 150 may be welded to the non-coating portion 111A of the first electrode plate 111 of the electrode assembly 110. In addition, the can contact portion 152 is illustrated as being interposed between the beading part 122A of the can 120 and the first gasket 140 and fixed thereto. For example, the electrode plate contact portion 151 of the first current collector plate 150 is welded to the non-coating portion 111A of the first electrode plate 111 of the electrode assembly 110, and the can contact portion 152 of the first current collector plate 150 is disposed on the beading part 122A of the can 120, thereby electrically connecting the first electrode plate 111 of the electrode assembly 110 and the can 120 to each other. Next, the first gasket 140 is placed on the beading part 122A of the can 120 to cover the can contact portion 152 of the first current collector plate 150, the cap plate 130 is seated thereon, and the crimping part 122B is then formed by bending the upper end of the can 120 together with the first gasket 140, thereby pressing and fixing the cap plate 130 and the first current collector plate 150. However, the present disclosure is not limited to the above structure. In some embodiments, the cap plate 130 may be directly welded and fixed to the upper end of the can 120. In such an embodiment, the first gasket 140 may be omitted and the can contact portion 152 of the first current collector plate 150 may be welded to the can 120 or the cap plate 130.

The terminal 160 is installed in the hole 121A in the lower surface 121 of the can 120 and is made of a conductive metal to be electrically connected to the second electrode plate 112 of the electrode assembly 110 through the second current collector plate 180. Therefore, when the second electrode plate 112 is a positive electrode plate, the terminal 160 has a positive polarity.

The terminal 160 has a larger diameter than the hole 121A in the lower surface 121 of the can 120 and may have an outer portion 161 supported on the outside of (e.g., on the outer surface of) the lower surface 121, an inner portion 162 having a larger diameter than the hole 121A in the lower surface 121 of the can 120 and supported from the inside of (e.g., on the inner surface of) the lower surface 121, and a connecting portion 163 inserted through (or extending through) the hole 121A in the lower surface 121 of the can 120 and connecting (or extending between) the outer portion 161 and the inner portion 162.

The terminal 160 may be installed, for example, by riveting. For example, in a state in which the inner portion 162 has a diameter equal to or smaller than the hole 121A in the lower surface 121 of the can 120, the inner portion 162 and the connecting portion 163 are inserted into the hole 121A, and then, the inner portion 162 is deformed to have a larger diameter than the hole 121A, thereby fastening the terminal 160 (e.g., to the hole 121A).

The second gasket 170 is disposed between the can 120 and the terminal 160 to tightly seal a space therebetween while insulating the can 120 and the terminal 160 from each other.

The second current collector plate 180 is disposed below the electrode assembly 110 and is made of a conductive metal to electrically connect the second electrode plate 112 of the electrode assembly 110 to the terminal 160. To this end, the second current collector plate 180 may be welded to the non-coating portion 112A of the second electrode plate 112 of the electrode assembly 110 and the inner portion 162 of the terminal 160, respectively.

The insulator 190 is disposed between the can 120 and each of the non-coating portion 112A of the second electrode plate 112 of the electrode assembly 110 and the second current collector plate 180 to insulate the can 120 from the electrode assembly 110 and the second current collector plate 180.

The insulator 190 may have a plate-shaped portion 191 formed in a shape corresponding to the lower surface 121 of the can 120 and an extending portion 192 extending upwardly from the circumference of the plate-shaped portion 191. The plate-shaped portion 191 and the extending portion 192 may be formed integrally or separately.

The plate-shaped portion 191 may have a diameter approximately equal to or slightly smaller than that of the can 120. To allow the insulator 190 to be smoothly inserted into the can 120, and considering that the lower surface 121 and the side surface 122 of the can 120 are typically curved, the plate-shaped portion 191 may have a slightly smaller diameter than the can 120.

In addition, the plate-shaped portion 191 may have a hole 191A formed for providing a space in which the terminal 160 is installed. Here, the hole 191A in the plate-shaped portion 191 may be formed to contact the second gasket 170. Therefore, because the plate-shaped portion 191 and the second gasket 170 continuously insulate, more reliable insulation can be achieved. Also, the hole 191A in the plate-shaped portion 191 may have a smaller diameter than the inner portion 162 of the terminal 160.

The extending portion 192 extends upwardly from the circumference of the plate-shaped portion 191 to surround (e.g., to extend around a periphery of) the non-coating portion 112A of the second electrode plate 112 of the electrode assembly 110 and the second current collector plate 180. For example, the extending portion 192 extends toward the empty space S at the outermost lower end of the electrode assembly 110, which results from a portion of the non-coating portion 112A of the second electrode plate 112 being removed.

An upper end of the extending portion 192 is brought into contact with the lower portion of the electrode assembly 110, more specifically, to a portion exposed downwardly (e.g., to a portion exposed at a lower end thereof) as a result of a portion of the non-coating portion 112A of the second electrode plate 112 being removed. In addition, the extending portion 192 may have the upper end that is substantially horizontally flatly to be in closer contact with the lower portion of the electrode assembly 110.

In addition, the extending portion 192 has an outer diameter corresponding to that of the electrode assembly 110 so that the outer surface of the extending portion 192 and the outer surface of the electrode assembly 110 may be connected substantially vertically flatly without a step difference therebetween.

The lower surface 121 of the can 120 and the second current collector plate 180 may be insulated by the plate-shaped portion 191 of the insulator 190, and the side surface 122 of the can 120 and each of the non-coating portion 112A of the second electrode plate 112 of the electrode assembly 110 and the second current collector plate 180 may be securely insulated from each other by the extending portion 192 of the insulator 190.

In addition, because the extending portion 192 of the insulator 190 does not surround the side surface of the electrode assembly 110 but contacts the lower portion of the electrode assembly 110, no additional space in the radial direction within the can 120 is occupied by the insulator 190, thereby increasing battery capacity while stably supporting the electrode assembly 110. Because the non-coating portion 112A of the second electrode plate 112 is removed by a length corresponding to 2 to 3 turns, which is not an excessive amount relative to the size of the electrode assembly 110, a sufficient current flow path can be maintained.

FIG. 3 illustrates a portion corresponding to portion II in FIG. 1 according to another embodiment of the present disclosure.

Referring to FIG. 3, comparing the secondary battery illustrated in FIG. 3 with the secondary battery 100 shown in FIGS. 1 and 2, the extending portion 292 of the insulator 290 is formed to have a thickness that gradually increases toward the lower portion. Because other components and arrangements of the secondary battery shown in FIG. 3 are substantially the same as those of the secondary battery 100 described above and, even if a different feature exists, such different feature is within what a person skilled in the art would naturally expect to change in response to said difference, and thus, a repetitive description thereof will be omitted. The following description will focus on said difference between embodiments.

The extending portion 292 of the insulator 290 is formed to have a thickness that gradually increases toward the lower portion of the electrode assembly 110 (e.g., toward the lower end of the can 120). In the drawing, the inner circumferential surface of the extending portion 292 is illustrated as being formed as a plane and inclined, but in other embodiments, the inner circumferential surface of the extending portion 292 may be formed as a curved surface.

The extending portion 292 has an increasing diameter as it extends upwardly from the plate-shaped portion 291. In addition, the extending portion 292 starts from the radially inner side of the outermost non-coating portion 112A of the second electrode plate 112 of the electrode assembly 110 and ends at the radially outer side of the outermost non-coating portion 112A of the second electrode plate 112 of the electrode assembly 110 and, thus, contacts the lower portion of the electrode assembly 110.

According to the above-described embodiment, the strength of the insulator 290 can be increased by reinforcing the thickness of the lower portion of the extending portion 292.

As described above, embodiments of the present disclosure provide a secondary battery in which an electrode assembly and a can are insulated from each other by arranging an insulator between the electrode assembly and the bottom of the can.

In addition, in embodiments of the present disclosure, an extending portion of an insulator does not surround the side surface of an electrode assembly but contacts the lower portion of the electrode assembly, and thus, no additional space is occupied by the insulator in the radial direction within a can. Accordingly, a secondary battery having increasing battery capacity while stably supporting an electrode assembly is provided.

The foregoing embodiments are only some embodiments for carrying out the secondary battery according to the present disclosure, which is not limited to the embodiments. It will be understood by a person skilled in the art that various changes in form and details may be made therein without departing from the scope of the present disclosure as defined by the following claims and their equivalents.

## Claims

1. A secondary battery comprising:
an electrode assembly;
a can having a lower surface and a side surface and accommodating the electrode assembly;
a cap plate coupled to an upper end of the can;
a terminal on the lower surface of the can; and
an insulator having a plate-shaped portion and an extending portion extending upwardly from a circumference of the plate-shaped portion, the plate-shaped portion being between the electrode assembly and the lower surface of the can and the extending portion having an upper end contacting a lower portion of the electrode assembly.

2. The secondary battery as claimed in claim 1, wherein the electrode assembly comprises:
a first electrode plate having a non-coating portion exposed upwardly from the electrode assembly;
a second electrode plate having a non-coating portion exposed downwardly from the electrode assembly; and
a separator between the first electrode plate and the second electrode plate, the first electrode plate, the separator, and the second electrode plate being wound together about an axis,
wherein a portion of the non-coating portion of the second electrode plate is removed at an outermost periphery of the electrode assembly by a radius, and
wherein the extending portion of the insulator extends toward a space from where the non-coating portion of the second electrode plate is removed.

3. The secondary battery as claimed in claim 2, wherein the non-coating portion of the second electrode plate is removed in a range corresponding to two to three turns of the electrode assembly.

4. The secondary battery as claimed in claim 2 or claim 3, wherein the separator forms an outer surface of the electrode assembly.

5. The secondary battery as claimed in any one of claims 1 to 4, wherein an upper end of the extending portion of the insulator is flat.

6. The secondary battery as claimed in any one of claims 1 to 5, wherein the extending portion has an outer diameter corresponding to that of the electrode assembly.

7. The secondary battery as claimed in any one of claims 1 to 6, wherein the extending portion of the insulator has a thickness that gradually increases toward a lower portion of the electrode assembly.

8. The secondary battery as claimed in any one of claims 1 to 7, wherein the terminal is in a hole in the plate-shaped portion.

9. The secondary battery as claimed in claim 8, further comprising a gasket between the can and the terminal,
wherein the gasket extends into the hole in the plate-shaped portion.

10. The secondary battery as claimed in claim 8 or claim 9, wherein the terminal has an outer portion on an outside of the lower surface of the can, an inner portion on an inside of the lower surface of the can, and a connecting portion extending through the hole in the plate-shaped portion and connecting the outer portion and the inner portion, and
wherein the hole in the plate-shaped portion has a smaller diameter than the inner portion of the terminal.
